Europäisches Patentamt

European Patent Office

Office européen des brevets

(19)

(11) Numéro de publication: **0 309 634**
**A1**

(12) **DEMANDE DE BREVET EUROPEEN**

(21) Numéro de dépôt: 87420263.3

(22) Date de dépôt: 30.09.87

(51) Int. Cl.⁴: **F25B 29/00 , F25B 27/00**

(43) Date de publication de la demande:
05.04.89 Bulletin 89/14

(84) Etats contractants désignés:
**AT BE CH DE ES FR GB GR IT LI LU NL SE**

(71) Demandeur: **Edwards, Walter H.**
**17207 Patronella Avenue**
**Torrrance California 90504(US)**

(72) Inventeur: **Edwards, Walter H.**
**17207 Patronella Avenue**
**Torrrance California 90504(US)**

(74) Mandataire: **Dupuis, François**
**Cabinet Charras 3 Place de l'Hôtel-de-Ville**
**BP 203**
**F-42005 St. Etienne Cédex 1(FR)**

(54) **Système de chauffage et de refroidissement intégré à grand rendement, à fonctionnement assisté par l'ambiance.**

(57) Un système (10, 110) de chauffage et de refroidissement en circuit fermé, de grand rendement, à fonctionnement assisté par ambiance-énergie, incorporant un débit unidirectionnel de réfrigérant permettant d'obtenir des fonctions simultanées de chauffage et/ou de réfrigération de locaux et d'eau, est décrit dans le présent mémoire, en liaison avec un panneau collecteur (12, 112) d'énergie-ambiance perfectionné destiné à être utilisé en conjonction avec le dit système.

EP 0 309 634 A1

Fig. 1.

## UN SYSTEME DE CHAUFFAGE ET DE REFROIDISSEMENT INTEGRE A GRAND RENDEMENT, A FONCTIONNEMENT ASSISTE PAR L'AMBIANCE.

### PREAMBULE DE L'INVENTION

#### Domaine de l'Invention

La présente invention est relative, en général, au secteur technique du conditionnement d'air et de la réfrigération, et se rapporte plus particulièrement à un système intégré, à fonctionnement assisté par ambiance et énergie, destiné à des applications de chauffage et de refroidissement d'eau et de locaux.

#### Exposé Succinct de la Situation Technique

On a conçu au cours de ces dernières années de nombreux systèmes de chauffage et de refroidissement basés en totalité ou en partie sur la radiation solaire pour assurer leur entrée d'énergie. Des systèmes de ce genre peuvent être divisés en deux catégories générales :

Une catégorie dans laquelle un fluide est mis en circulation dans un collecteur ou receveur solaire où il absorbe de la chaleur qui est ensuite transférée au moyen d'un échangeur thermique à un autre fluide, par exemple de l'eau pour des usages domestiques, ou à un agent d'accumulation thermique tel que des sels à point de fusion à basse température, etc...

La deuxième catégorie générale de systèmes thermiques utilise un réfrigérant ou un fluide de travail à point d'ébullition à basse température, qui est soumis à un cycle thermodynamique, incluant une évaporation dans le panneau solaire, un surchauffage par compression, et une condensation dans un échangeur thermique. Un exemple de ce dernier type est divulgué dans le brevet U.S. N° 4.392.359 au nom de Franklin. Un autre exemple encore de ce deuxième type de système est divulgué par Charters et al., dans le brevet U.S. N° 4.302.942.

On connait pour les deux types de systèmes ci-dessus de nombreuses variantes incluant des systèmes hybrides qui combinent les deux réalisations d'ordre général précitées, comme le système hybride divulgués par Ecker dans le brevet U.S. N° 4.308.042. Parmi d'autres points de différenciation, les systèmes connus différent en outre en ce qui concerne les réfrigérants et fluides de travail utilisés.

Les systèmes existants de pompes de chaleur peuvent assurer aussi bien un chauffage qu'un refroidissement grâce à l'utilisation de ce qu'on appelle une "vanne d'inversion" pour l'inversion du sens de débit du réfrigérant dans le système, en passant de ce fait d'un mode de chauffage à un mode de refroidissement. C'est ainsi par exemple que dans le mode de chauffage, un panneau collecteur solaire agit à la manière d'un évaporateur dans lequel est chauffé un fluide réfrigérant, tandis que le serpentin de l'échangeur thermique agit à la manière d'un condensateur où le réfrigérant chaud chauffe de de l'air ou de l'eau. En inversant le sens de débit du réfrigérant, le serpentin de chauffage d'air peut se mettre à fonctionner à la manière d'un évaporateur, en absorbant de la chaleur à partir de l'air intérieur dans une enceinte. La chaleur est dissipée sur l'atmosphère extérieur par l'intermédiaire du panneau solaire extérieur, le panneau agissant maintenant à la manière du condensateur.

Un défaut majeur de ces systèmes de la technique antérieure a été le fait qu'il n'était pas possible d'assurer simultanément du chauffage et du refroidissement. Une construction résidentielle type a des besoins permanents en eau chaude, outre les besoins en chauffage ou en réfrigération du volume d'air intérieur. Le besoin d'une admission de chaleur sur un système de chauffage d'eau simultanément avec un besoin de réfrigération de l'intérieur de la construction ne pouvaient pas être satisfaits par aucun des systèmes chauffage/refroidissement connus, relativement simples. Même sans tenir compte de l'impossibilité de répondre à des besoins de chauffage et de refroidissement simultanés, les systèmes de pompes de chaleur traditionnels basés sur des vannes d'inversion pour l'alternance des modes opératoires ont souvent présenté des problèmes de fiabilité et de durées de service réduites des composants par suite de la contrainte additionnelle imposée aux composants par les inversions du sens de débit, et des différentiels de pression d'inversion se manifestant en conséquence, en exerçant un effet sur les différents composants des systèmes. Par ailleurs et de plus, l'emploi de vannes d'inversion ajoute à la complexité et au prix de revient du système.

### EXPOSE DE L'INVENTION

En conséquence, un but de la présente invention consiste en la réalisation d'un système de chauffage et de refroidissement intégré fiable, relativement simple et peu coûteux, qui n'exige pas de vanne d'inversion, qui soit capable de répondre simultanément à des besoins de chauffage et de réfrigération se manifestant en même temps, et qui fonctionne avec une très grande efficacité hors tout en vue de l'obtention d'un maximum de transfert thermique pour une entrée d'énergie donnée sur le système.

De préférence, on atteint ces buts, ainsi que d'autres, de la présente invention, dans un système de chauffage et de refroidissement intégré, à fonctionnement assisté par ambiance-énergie, qui est caractérisé par son aptitude à répondre simultanément à des besoins de chauffage et de réfrigération se manifestant en même temps, pour des locaux de type moyen par exemple, tout en maintenant à tous moments un débit unidirectionnel de réfrigérant dans le système, en supprimant ainsi toute nécessité d'une vanne d'inversion de sens de débit.

Le système chauffage/réfrigération de la présente invention inclue un panneau monté extérieurement pour recueillir l'énergie ambiante, y compris l'énergie solaire incidente, ce panneau étant pourvu de tubulures d'entrée et de sortie de réfrigérant. Un compresseur est branché sur la sortie du panneau afin de comprimer le réfrigérant chauffé dans le panneau collecteur. Un premier échangeur thermique et un deuxième échangeur thermique sont branchés en parallèle pour la réception de réfrigérant chaud à partir du compresseur, et les deux échangeurs thermiques sont reliés de façon à assurer le retour du réfrigérant, par l'inter médiaire d'une soupape d'expansion, sur l'entrée du panneau collecteur. La soupape d'expansion est branchée pour détecter la température du réfrigérant se débitant à partir de la sortie du collecteur, et pour répondre à cette température de manière à assurer la régulation du débit de réfrigérant dans et par le panneau collecteur sous des températures ambiantes variables et dans des conditions variables d'énergie ambiante incidente frappant le panneau, ces températures et ces énergies assurant ensemble le degré de chauffage du réfrigérant dans le panneau. Le premier échangeur thermique peut consister en un ou plusieurs serpentins de chauffage d'eau, tandis que le deuxième échangeur thermique peut consister en un serpentin de chauffage d'air. Le réfrigérant sortant du serpentin de chauffage d'eau se débite dans un receveur de réfrigérant liquide, puis dans un serpentin de pré-réfrigération, où la chaleur en excès encore transportée par le réfrigérant est dissipée avant le retour du réfrigérant au panneau collecteur.

La sortie du pré-réfrigérateur peut également être raccordée, au moyen d'une vanne à solénoïde et par l'intermédiaire d'une deuxième vanne d'expansion, avec l'entrée d'un troisième échangeur thermique qui sert pour une fonction de réfrigération, par opposition à la fonction de chauffage assurée par le premier et le deuxième échangeur thermique. Le réfrigérant se débite par l'intermédiaire de la deuxième soupape d'expansion dans le troisième échangeur thermique, où ce réfrigérant est soumis à une décompression. Le réfrigérant, qui a d'ores et déjà cédé sa teneur en chaleur dans le premier et/ou dans le deuxième échangeur thermique, et qui a été en outre refroidi dans le pré-réfrigérateur, se trouve maintenant exposé à une nouvelle baisse importante et rapide de température, en conséquence de l'expansion dans la deuxième soupape d'expansion. Le réfrigérant qui se débite ainsi dans le troisième échangeur thermique est froid, et peut facilement absorber de la chaleur, à partir par exemple de l'air intérieur soufflé à travers la troisième échangeur thermique, ce dernier fonctionnant dans ce cas à la manière d'un serpentin de réfrigération d'air. Le réfrigérant sortant du troisième échangeur thermique est retourné directement sur l'entrée du panneau collecteur. en contournant la première soupape d'expansion.

Le système est pourvu de vannes pour la commande sélective du débit de réfrigérant dans chacun des échangeurs thermiques, en fonction des besoins du moment en chauffage et en refroidissement. C'est ainsi par exemple que des vannes de commande à solénoïde peuvent être contrôlées par des dispositifs thermostatiques appropriés pour la sélection indépendante de toute combinaison des trois échangeurs thermiques, en répondant ainsi simultanément à des besoins de chauffage et de refroidissement, le tout en maintenant un débit de réfrigérant unidirectionnel.

Une caractéristique nouvelle de la présente invention inclue l'utilisation d'un panneau unique d'absorption d'énergie ambiante, de fabrication simple, qui est optimisé pour le fluide de travail particulier et les transferts d'énergie envisagés sur le système en circuit fermé.

Le système de la présente invention incorpore en outre un certain nombre d'autres caractéristiques nouvelles, y compris l'emploi d'un réfrigérant particulier, les dimensions relatives de certaines conduites, et d'autres caractéristiques encore qui seront décrites ci-après, ces caractéristiques permettant au présent système de fonctionner d'une manière extrêmement efficace au point de vue énergétique, tout en assurant les avantages mentionnés ci-avant.

Un autre aspect encore, utile et nouveau, de l'invention réside dans le fait qu'elle emploie, dans un système chauffage/refroidissement intégré, un cycle caractérisé par la circulation tout d'abord d'un réfrigérant chaud vers une charge de chauffe, et par l'expansion ensuite, dans une charge de refroidissement, du réfrigérant plus froid mais toujours pressurisé, en assurant ainsi simultanément des fonctions aussi bien de chauffage que de réfrigération.

Ces buts et avantages, ainsi que d'autres, apparaitront de façon évidente aux personnes spécialisées dans la partie, lors de l'examen de la description détaillée qui suit, en liaison avec l'examen des dessins.

DESCRIPTION DES DESSINS

La Fig. 1 est un schéma simplifié de disposition générale d'un système chauffage/réfrigération intégré construit selon la présente invention.

La Fig. 2 illustre une construction de panneau évaporateur préférée pour un système chauffage/réfrigération selon la présente invention.

La Fig. 3 est une vue en coupe du panneau, correspondant à la section III - III de la Fig. 2.

La Fig. 4 est une autre vue en coupe du panneau, correspondant à la section IV - IV de la Fig. 2.

La Fig. 5 est un schéma de disposition générale plus détaillé d'un système chauffage/réfrigération pour une installation domestique type, selon la présente invention.

DESCRIPTION DE LA MISE EN OEUVRE PREFEREE

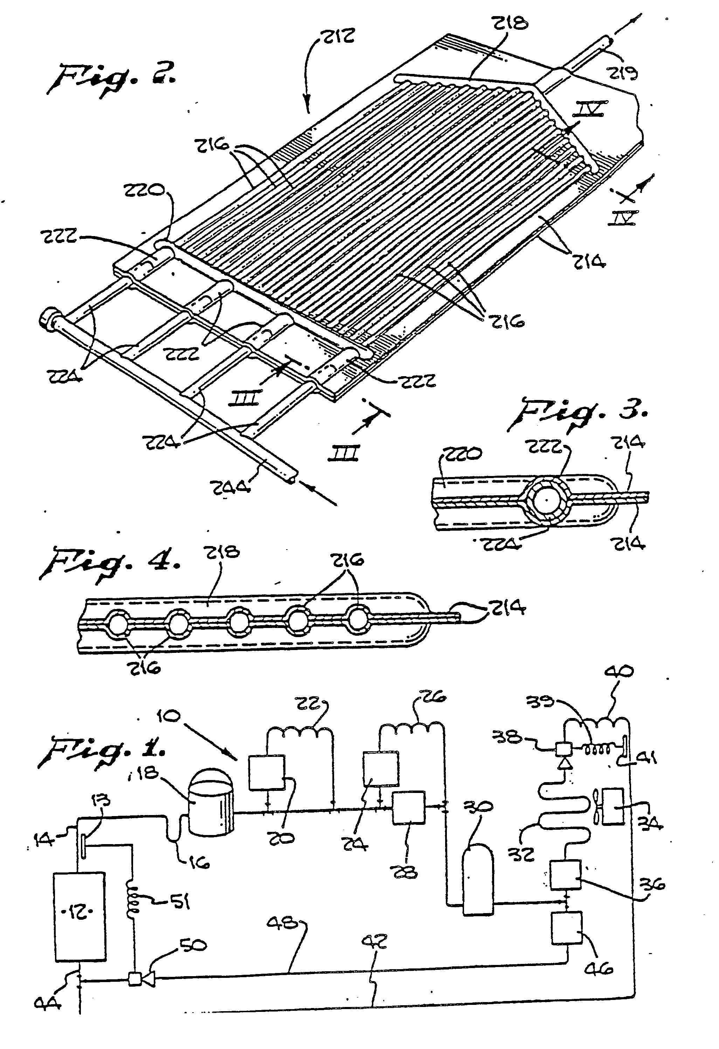

En ce qui concerne les dessins, la Fig. 1 représente, sous une forme basique, le système chauffage/réfrigération intégré 10, incluant un panneau d'absorption d'énergie ambiante 12, qui est installé extérieurement par rapport à un local fermé desservi par le système, le système étant de préférence orienté de façon à maximiser la radiation solaire moyenne incidente frappant le panneau 12 et absorbée par celui-ci. La sortie 14 du panneau 12 est branchée sur un compresseur 18 par l'intermédiaire d'un collecteur à huile 16. La sortie du compresseur est reliée à un premier échangeur thermique ou condensateur 22 et à un deuxième échangeur thermique ou condensateur 26 en parallèle, qui constituent des charges de chauffe telles que des serpentins de chauffage d'eau dans une installation domestique.

Un fluide réfrigérant est chauffé jusqu'à l'état gazeux dans le panneau 12, et est chauffé complémentairement et comprimé jusqu'à l'état liquide dans le compresseur 18. Le liquide chaud, par l'intermédiaire de vannes à solénoïde 20 et 24 respectivement, est débité dans les serpentins des échangeurs thermiques 22 et /ou 26, dans lesquels ce liquide est mis en contact d'échange thermique avec des charges de chauffe, par exemple de l'eau froide qui est ainsi chauffée par absorption de chaleur à partir du réfrigérant débité. La sortie des échangeurs thermiques 22 et/ou 26 débite dans un réservoir de réception de liquide chaud 30.

Le receveur 30, à son tour, peut être branché par l'in termédiaire d'une vanne à solénoïde 36 sur un prérefroidisseur 32, qui est de préférence refroidi par air au moyen d'un ventilateur 34. Le fluide de travail, ainsi refroidi, est par l'intermédiaire d'une soupape d'expansion 38 débité à l'entrée d'un troisième échangeur thermique à serpentin 40. Le réfrigérant liquide se dilate et vaporise dans la soupape 38, avec en conséquence une chute importante de la température du gaz réfrigérant, qui se débite ensuite dans l'échangeur thermique 40. Le réfrigérant froid est alors en mesure d'absorber de la chaleur à partir d'un média tel qu'un courant d'air intérieur mis en contact d'échange thermique avec la surface de l'échangeur thermique 40. La sortie de l'échangeur thermique à serpentin 40 est, par l'intermédiaire d'une canalisation de retour basse pression 42, reliée à l'entrée de réfrigérant 44 du panneau évaporateur 12, dans lequel le réfrigérant gazeux est chauffé de nouveau.

Une conduite de retour haute pression 48 est également prévue pour être reliée à la sortie du receveur 30 au moyen d'une vanne à solénoïde 46 de manière à permettre le retour direct de réfrigérant à partir du receveur 30, par l'intermédiaire d'une soupape d'expansion 50, sur l'entrée 44 du panneau évaporateur 12. Les vannes à solénoïde 36 et 46 sont donc prévues pour diriger sélectivement le débit de réfrigérant à partir du receveur 30, soit dans la ramification de refroidissement, y compris le troisième échangeur thermique 40, par la fermeture de la vanne 46 et l'ouverture de la vanne 36; soit pour retourner le liquide réfrigérant directement au collecteur 12, pr la fermeture de la vanne 36 et l'ouverture de la vanne 46, afin de répondre à un besoin de réfrigération dans le premier cas, et de contourner le troisième échangeur thermique dans le deuxième cas, s'il n'existe pas de besoins de réfrigération.

Chaque serpentin condensateur est associé à une vanne qui ouvre ou ferme le serpentin au débit de réfrigérant selon ce qui est nécessaire pour répondre aux besoins en énergie de l'installation. C'est ainsi que le serpentin 26 est couplé en série avec la vanne 24 et en parallèle avec la vanne 28. Une des vannes est toujours ouverte, tandis que l'autre est fermée, soit pour diriger le réfrigérant dans le serpentin 26, soit pour lui faire contourner ce dernier. Les vannes 36 et 46 fonctionnent de façon similaire en ce qui concerne le serpentin de réfrigération 40, comme il a été décrit ci-avant.

La vanne 20 dirige le débit de réfrigérant soit dans le serpentin 22, soit autour de celui-ci. Lorsque la vanne 28 est ouverte, et que les vannes 20 et 24 sont fermées, le réfrigérant contourne les deux serpentins condensateurs 22 et 26. Dans ce mode opératoire, le réfrigérant liquide se débite seulement dans le serpentin de refroidissement 40, en raison de l'absence d'un besoin de chaleur aux serpentins de chauffage 22 et 26. Alors que le réfrigérant se débitant dans la soupape d'expansion 38 sera plus chaud de ce fait, étant donné qu'il n'a pas eu l'occasion de transmettre de la chaleur dans les serpentins de chauffage, il y aura un prélèvement d'une certaine quantité de chaleur par le pré-refroidisseur 32, et une fonction de refroidissement sera quand même obtenue dans l'échangeur thermique 40, à un rendement quelque peu plus réduit que cela ne serait le cas si le réfrigérant devait transférer de la chaleur sur une charge de chauffe avant de se débiter dans la soupape d'expansion 38.

Le système de la Fig. 1 inclue un collecteur ou piège à huile 16 branché entre la sortie de panneau 14 et l'entrée du compresseur 18. La disposition d'un piège à huile en amont du compresseur 18 résoud le problème d'une surcharge de compresseur, qui se présente de manière courante dans les systèmes existants de pompes de chaleur, et qui est causé par l'huile liquide se débitant dans le compresseur 18 lorsque ce dernier est prévu pour fonctionner sur un mélange finement divisé d'huile et de réfrigérant. L'huile liquide est rigoureusement incompressible, et si elle n'est pas captée dans un piège, elle surchargera le compresseur, et entrainera par la suite la défaillance prématurée de celui-ci.

Le système illustré à la Fig. 1 a été représenté d'une manière simplifiée pour faciliter la compréhension des principes généraux du nouveau système, grâce auquel on assure aussi bien du chauffage que du refroidissement, tout en maintenant un débit unidirectionnel de réfrigérant dans le système, dont une description plus détaillée va être donnée maintenant.

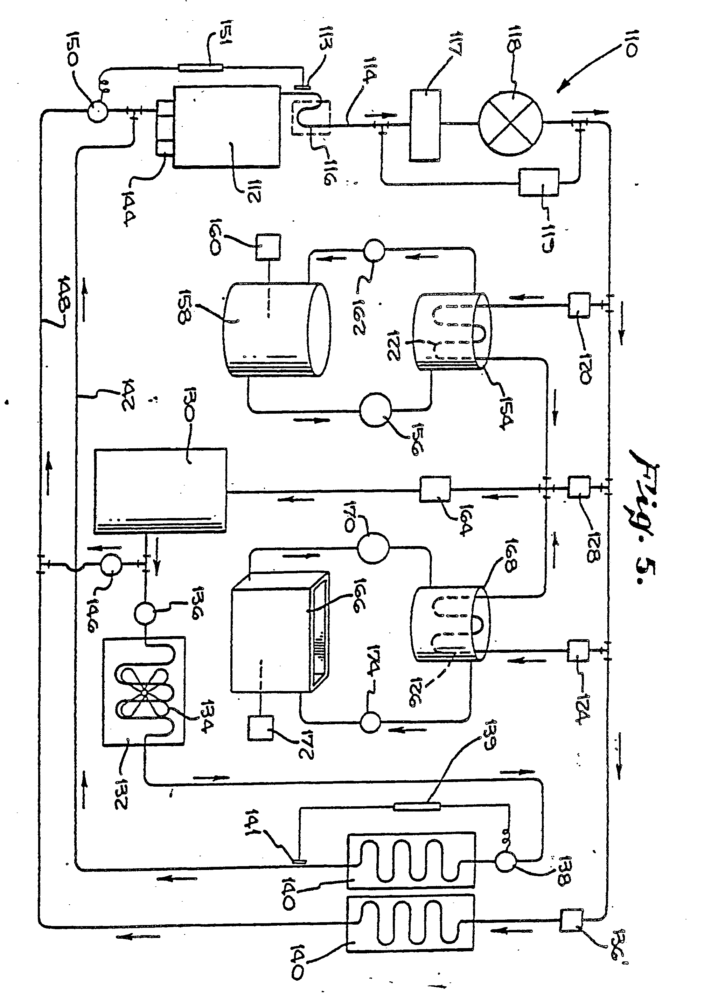

En ce qui concerne la Fig. 5, on a représenté ici, sous une forme schématique, un système chauffage/refroidissement plus complet 110, qui inclue le système de base 10 de la Fig. 1, de sorte que les éléments communs sont indiqués par les mêmes repères, plus 100.

Un mélange vaporisé Freon/huile est chauffé dans le panneau absorbeur d'énergie ambiante 112, qui est monté dans une position généralement verticale, de manière que l'entrée 144 se trouve au bas du panneau, et que la sortie 114 se trouve dans le haut du panneau. Le mélange huile/Freon est débité à partir du panneau 112 par l'intermédiaire d'une sortie d'un demi-pouce (12 mm) qui est raccordée à l'entrée du compresseur 118 par une tuyauterie d'aspiration de 7/8" (22 mm) 114. La température du gaz débité par tuyauterie 114 est détectée par une ampoule hermétique 113 en contact thermique avec la tuyauterie 114 et reliée par un capillaire 151 à un orifice variable dans la soupape d'expansion 150. Le gaz à l'intérieur de l'ampoule 113 se dilate ou se contracte en fonction de la température du réfrigérant dans la sortie 114, et par l'intermédiaire du raccordement capillaire 151 fait varier les dimensions de l'orifice d'expansion dans la soupape 150, en contrôlant ainsi le débit du réfrigérant dans le panneau 112. Le diamètre intérieur élargi de la tuyauterie d'aspiration 114 par rapport à la sortie de panneau de 1/2 pouce agit de façon à stabiliser le débit de gaz dans le compresseur 118, et assure de ce fait un maximum de rendement pour le système.

Un filtre-séchoir 117 éloigne l'humidité et les matières en particules du réfrigérant, avant l'entrée de celui-ci dans le compresseur 118.

Le gaz est comprimé jusqu'à l'état liquide dans le compresseur 118, et le liquide chaud est débité hors du compresseur 118 dans une tuyauterie de 3/8" (10 mm). Un interrupteur répondant à la pression 119, à fonctionnement garanti exempt de défaillances, est branché à travers le compresseur 118, et agit de façon à couper l'énergie pour le système dans le cas d'une pression insuffisante dans le compresseur 118.

Conformément à ce qui a été indiqué ci-avant, la transition entre une ouverture de 1/2" (12 mm) au panneau 112 et une tuyauterie d'aspiration de 7/8" (22 mm) 114 pour le compresseur 118 crée un effet Venturi, qui augmente la vitesse de débit du réfrigérant à ce passage d'un diamètre à un autre, en stabilisant la pression fonctionnelle du système, et en accroissant l'efficacité du compresseur. La combinaison du chauffage dans le panneau 112 et du changement de pression précité augmente la pression d'aspiration dans la tuyauterie 114, ce qui minimise la charge sur le compresseur 118, en réduisant ainsi l'énergie consommée par le compresseur 118 et en prolongeant la durée de service qu'on peut attendre de ce compresseur.

Le compresseur 118 peut être un compresseur rotatif, un compresseur centrifuge, un compresseur hermétique ou un compresseur du type à hélice. Dans la mise en oeuvre préférée, on utilise un compresseur rotatif 118 avec une tête céramique, tirant approximativement en service 4 ampères sur courant alternatif 120 V. Ce niveau de consommation de courant représente approximativement la moitié du courant consommé par les compresseurs types actuellement utilisés dans les systèmes de chauffage d'eau et d'air se rapprochant le plus du présent système.

Le réfrigérant, à partir du compresseur 118, est chassé sous forme de liquide dans une tuyauterie de 3/8" (10 mm), où il peut, par l'intermédiaire d'une vanne à solénoïde 136', être mis en communication avec un échangeur thermique à serpentin 140', qui, dans la mise en oeuvre particulière illustrée à la Fig. 5, consiste en un serpention de chauffage d'air, à savoir qu'un ventilateur souffle de l'air par ventilation forcée sur la surface du serpentin 140' afin d'extraire de la chaleur du réfrigérant se débitant dans ce serpentin, d'une manière bien connue dans la branche. Le réfrigérant liquide sort à basse température du serpentin 140', et passe dans une tuyauterie de 3/8" pour retour au panneau 112 par l'intermédiaire de la soupape d'expansion 150.

La soupape d'expansion 150 peut comporter soit un orifice fixe, soit un orifice réglable où le réfrigérant liquide est soumis à une rapide chute de pression, à la suite de quoi il vaporise et se trouve également soumis à une réduction substantielle dans sa température. Le réfrigérant vaporisé est ensuite débité dans la tubulure d'admission du panneau 112, à partir de laquelle il est distribué dans des passages verticaux parallèles, où il est chauffé par absorption de radiation solaire et/ou de chaleur prélevée sur l'environnement, et est ensuite collecté par la tubulure d'échappement dans le haut du panneau, pour répéter le cycle précité.

Le cycle de chauffage d'eau domestique, dans le système de la Fig. 5, inclue une tuyauterie de 3/8" (10 mm) reliée au compresseur 118, dans laquelle le réfrigérant liquide, par l'intermédiaire d'une vanne à solénoïde 120, peut être mis en communication avec une ouverture de 5/8" (15 mm) dans un serpentin de condensation 122, qui est un serpentin de chauffage d'eau immergé dans un échangeur thermique 154. Une pompe de circulation 156, par une tuyauterie de 7/8" (22 mm), dirige à partir du réservoir d'accumulation isolé 158, de l'eau dans l'échangeur thermique 154. La température de l'eau dans le réservoir d'accumulation 158 est mesurée par un aquastat 160 qui contrôle électriquement la pompe 156 et la condition de la vanne à solénoïde 120, à savoir que si la température de l'eau tombe en dessous d'un niveau pré-réglé, la pompe 156 est mise en action et la vanne 120 est ouverte de façon à admettre le réfrigérant liquide chaud dans le serpentin d'échangeur thermique 122, afin de chauffer l'eau circulant dans l'échangeur thermique 154 jusqu'au niveau de température désiré, niveau auquel la vanne 120 se ferme et la pompe 156 est arrêtée par suite de l'effet de contrôle de l'aquastat 160. L'eau chauffée se débite hors de l'échangeur 156, franchit le clapet anti-retour 162 et passe dans le réservoir d'accumulation isolé 158, pour mise en réserve jusqu'à utilisation.

Le réfrigérant, refroidi par son contact avec l'eau chauffée, se débite hors du serpentin de condensation 142 pour passer dans une tuyauterie de 3/8" (10 mm) jusqu'à un filtre/séchoir 164, dans le receveur à liquide 130, puis pour passer de là, dans un mode de refroidissement, dans le serpentin de pré-refroidissement 132. Au fur et à mesure que le réfrigérant se débite par le serpentin de pré-refroidissement 132, ce réfrigérant est refroidi complémentairement par un ventilateur 134 entraîné par un petit moteur électrique. Le moteur du ventilateur peut être aussi petit qu'un moteur de 1/180 CV, de sorte que ce moteur consomme une très petite quantité d'énergie électrique.

Lorsqu'il n'y a pas de besoin de refroidissement quelconque, l'évitement de la ramification de refroidissement, y compris le pré-refroidisseur 132 et le serpentin de réfrigération 140, est assuré au moyen de la valve à solénoïde 146, qui fait revenir le réfrigérant liquide directement sur la panneau 112 par l'intermédiaire de la tuyauterie de retour haute pression 148 et de la soupape d'expansion 150.

Le système de chauffage d'eau de la Fig. 5 inclue en outre un circuit de chauffage approprié pour chauffer de l'eau dans une piscine ou un poste de baignade 166. Le système incorpore une vanne à solénoïde 124, qui contrôle le débit de réfrigérant par l'intermédiaire d'une ouverture de 5/8" (15 mm) dans le serpentin du condensateur 126 contenu à l'intérieur de l'échangeur thermique 168. Le diamètre intérieur élargi de 5/8" du serpentin de condensation 168, par rapport au diamètre de 3/8" (10 mm) de la tuyauterie d'alimentation de réfrigérant dans le circuit de chauffage d'eau piscine/poste de baignade ralentit efficacement la vitesse de débit du réfrigérant liquide dans le serpentin de chauffage d'eau 126, en permettant ainsi un échange thermique amélioré entre le réfrigérant et l'eau. La pompe de circulation 170 dirige l'eau par l'intermédiaire d'une tuyauterie de 7/8" (22 mm) à partir de la piscine ou poste de baignade 166, où la température de l'eau est contrôlée par l'aquastat 172. L'aquastat 172 commande aussi bien la valve à solénoïde 124 que la pompe de circulation 170 de manière à admettre du réfrigérant dans le serpentin 126 de l'échangeur 168 et à mettre en action la pompe 170 lorsqu'il existe un besoin additionnel de chauffage d'eau, et à fermer la vanne 124 et à arrêter la pompe 170 en cas d'absence d'un besoin de ce genre. La circulation de l'eau hors de la piscine ou poste de baignade 166 est assurée par l'intermédiaire du clapet anti-retour 174.

Comme précédemment, le réfrigérant refroidi sort du condensateur 126 et se débite par une sortie de 3/8" (10 mm), à partir de laquelle il suit le cycle de réfrigérant déjà décrit par rapport au circuit de chauffage d'eau expliqué ci-avant.

Le circuit de conditionnement d'air de la mise en oeuvre illustrée à la Fig. 5 inclue une tuyauterie de 3/8" (10 mm) établie à partir du compresseur 118 et pouvant être raccordée directement à l'entrée du receveur de liquide 130. La vanne à solénoïde 136 permet alors au réfrigérant liquide, sélectivement, de s'écouler dans le pré-refroidisseur 132 et dans la soupape d'expansion 138, où le réfrigérant liquide est vaporisé, et éprouve ainsi une chute substantielle de température. Le réfrigérant vaporisé se débite dans le serpentin de refroidissement 140, où la fonction de conditionnement d'air s'exécute par air forcé soufflé sur la surface du serpentin de refroidissement 140, de façon que le réfrigérant froid vaporisé absorbe de la chaleur à partir de l'air chaud soufflé. Lorsque la vapeur de réfrigérant se débite hors du serpentin de refroidissement 140 et passe dans la tuyauterie de 3/8", cette vapeur de réfrigérant se débite sur le détecteur à ampoule 141 en contact thermique avec le réfrigérant se débitant par la sortie du serpentin de refroidissement 140. Le détecteur 141 contrôle l'ouverture de l'orifice variable dans la soupape d'expansion 138 par l'intermédiaire d'un raccordement capillaire 139, d'une manière bien connue dans la partie. La tuyauterie de retour basse pression 142 retourne ensuite le réfrigérant directement sur l'entrée 144 du panneau d'absorption d'énergie 112, en contournant la soupape d'expansion 150, dont l'intervention n'est pas nécessaire étant donné que le réfrigérant en retour se trouve d'ores et déjà vaporisé par son passage dans l'échangeur thermique 140.

Comme on peut le voir d'après la Fig. 5, l'admission du réfrigérant à la ramification de refroidissement, comprenant le pré-refroidisseur 132, le soupape d'expansion 138 et le serpentin de refroidissement 140, peut inclure du réfrigérant pré-refroidi dans les serpentins de chauffage d'eau 122 et/ou 126, ainsi que du réfrigérant liquide chaud se débitant directement à partir du compresseur 118. Les hommes de métier pourront se rendre compte que l'efficacité du système est renforcé lors de la co-existence d'une charge de chauffe et d'une charge de refroidissement.

La Fig. 2 illustre une mise en oeuvre préférée du panneau d'absorption d'énergie ambiante 212, particulièrement prévue comme devant faire partie de la présente invention. Le panneau ou évaporateur 212 se compose de deux feuilles identiques 214 en alliage d'aluminium anodisé noir, brasées, agglomérées ou soudées l'une à l'autre dos à dos de manière à former un panneau rectangulaire d'une dimension d'approximativement 3' × 5' (0,90 m × 1,50 m). Les deux feuilles 214 du panneau 212 sont hydro-façonnées ou embouties avec des ondulations semi-circulaires de manière à définir quarante trois passages parallèles 216, chacun de 3/8" (10 mm) de diamètre, qui se terminent à leurs extrémités supérieures de sortie en une tubulure en forme de V renversé de 1" (25 mm) de diamètre 218 façonnée dans les feuilles 214. La sortie de réfrigérant de 1/2"(12 mm) 219 du panneau 212 examiné ci-dessus est reliée à la tubulure 218 au sommet·de celle-ci. Cette configuration particulière de tubulure de sortie permet une égalisation de pression dans le haut des tubes parallèles 216, et favorise ainsi un débit de réfrigérant équilibré dans chacun des tubes 216 en vue d'une absorption maximum de chaleur par le panneau 212.

Les tubes verticaux 216 sont raccordés à leurs extrémités inférieures d'entrée au moyen d'une tubulure horizontale 220 formée dans les feuilles 214; de 1" (25 mm) de diamètre, à laquelle sont reliées quatre tuyauteries d'admission de 1/2"de diamètre 222, disposées à égale distance les unes des autres, et également formées dans les feuilles 214, chacune de ces tuyauteries étant alimentée par un tube d'admission de 1/2"de diamètre 224. Cette conception de tubulure d'admission, de manière similaire, favorise une distribution égale de courant de réfrigérant à travers le panneau 212 par l'intermédiaire des tubes verticaux individuels 216, en vue d'une absorption optimum de chaleur. La tuyauterie d'admission 244 du panneau relie en parallèle les tubes d'admission 224, et s'établit légèrement en pente par rapport à la gravité, afin de permettre à l'huile de lubrification ou aux autres condensats de s'évacuer du panneau 212.

Le panneau évaporateur 212 construit de la façon décrite ci-avant pèse approximativement 20 lbs (10 Kg), et la légèreté de son poids permet une grande souplesse dans son installation. Si on le désire, le panneau peut par exemple être accroché au mur extérieur d'un immeuble.

Pour en revenir maintenant au système illustré à la Fig. 5, on notera que le contrôle et la régulation de tout le système en vue d'obtenir un rendement maximum peuvent être assurés par un contrôleur approprié incorporant des techniques de microprocesseurs, qui règle tous les besoins de chauffage et de refroidissement du système. Lorsque les demandes pour des fonctions individuelles de chauffage et de refroidissement sont satisfaites, les vannes à solénoïde correspondantes se ferment et s'ouvrent sous la direction du contrôleur, de manière à interrompre le débit de réfrigérant sur les parties du système qui ne sont pas utilisées.

Le choix du réfrigérant destiné à être employé dans le système intégratif chauffage/refroidissement décrit ci-avant est considéré de façon particulière et distinctive comme constituant une partie importante de la présente invention. Le réfrigérant actuellement préféré est un fluide de travail de synthèse existant dans le commerce sous la désignation "Freon 502". "Freon" est une marque de fabrique déposée des Ets. E. I. Du Pont de Nemours & Co., Inc. Bien que ce réfrigérant existe dans le commerce depuis 1961 environ, son utilisation dans le passé a été limitée aux installations commerciales de gros calibre, telles que des chambres froides, et le déposant de la présente demande de brevet n'a pas connaissance qu'on ait trouvé pour ce produit d'application particulièrement répandue en ce qui concerne les systèmes chauffage/refroidissement avec assistance solaire du type divulgué dans la présente demande de brevet, et notamment en ce qui concerne des systèmes de petite capacité prévus pour des besoins domestiques types.

Le Freon 502 a un point d'ébullition moins élevé que les autres fluides de travail actuellement utilisés dans les systèmes de chauffage/refroidissement de locaux, et il a été constaté qu'il confère aux dits systèmes une efficacité énergétique nettement accrue. Le réfrigérant pénètre dans le panneau collecteur 12 du système à une température estimée à moins de 55° F (-12° C), et est ainsi en mesure d'absorber facilement de la chaleur, non seulement à partir de la radiation solaire incidente frappant la surface du panneau, mais également et tout aussi bien à partir de l'air environnant, quelles que soient les conditions solaires. En particulier, on estime que le présent système est en mesure d'extraire de la chaleur à partir de l'atmosphère à des températures aussi basses qu'un minimum de 55° F (12° C) Les caractéristiques thermiques supérieures du Freon 502 permettent de réduire la dimension du panneau absorbeur 112, et également de réduire la capacité, et par conséquent la consommation d'énergie, du compresseur 118. C'est ainsi que dans un système type tel que celui illustré à la Fig. 5, la consommation totale d'énergie du système est d'approximativement 1645 watts pour le compresseur 118, plus une très petite quantité d'énergie requise par le ventilateur de 1/180 CV du pré-refroidisseur 132.

Il a été constaté qu'un système construit selon la présente invention est apte à fournir toute l'énergie d'un foyer domestique type aussi bien pour l'eau chaude que pour le chauffage et la réfrigération des locaux. Si on le désire, toutes les trois fonctions peuvent être assurées simultanément. On notera que les fonctions de chauffage et de refroidissement, dans le présent système, peuvent s'exécuter de façon intégrée qui est complémentaire dans le sens que plus le besoin en chaleur imposé sur le système est grand, plus la fonction de refroidissement assurée simultanément avec le besoin en chaleur sera efficace. Ceci est dû au fait que plus la quantité de chaleur extraite du réfrigérant liquide se débitant dans les serpentins de chauffage 122 et/ou 126 est importante, plus le réfrigérant sera froid à la soupape d'expansion 138 et au serpentin de réfrigération 140. Par conséquent, on obtient un conditionnement d'air ou une autre fonction de refroidissement avec des frais d'énergie minimaux et d'une manière presque incidente à une fonction de chauffage.

Lors d'essais dans des conditions réelles, conduits avec le système 110 construit selon la présente invention, au cours d'une journée alors que la température de l'air extérieur était de 83° F (28° C) avec ciel couvert, une réserve d'eau de 35 gallons (130 litres) a été chauffée en 15 minutes d'une température initiale de l'eau de 60° F (15° C) jusqu'à une température de 90° F (32° C). La température de l'eau dans la réserve a été portée complémentairement à 140° F (60° C) en 30 minutes de plus. Dans un autre essai conduit avec le panneau collecteur 112, couvert de façon à bloquer directement la radiation solaire, la chaleur n'étant donc extraite qu'à partir de la température ambiante, la température de l'eau dans la réserve a été augmentée de 60° F (16° C) jusqu'à 147° F (63° C) en 90 minutes.

Dans un autre essai de la capacité de chauffage d'air du système ci-dessus 110, conduit par une journée de temps couvert avec une température d'air extérieur de 80° F (27° C), de l'air soufflé à travers le serpentin de chauffage d'air 140 à un régime 1300 CFM (pieds cubes/minute - 36 m3 à la minute), a atteint une température d'état permanent de 145° F (63° C) après 15 minutes de fonctionnement du système.

Dans un autre essai de la capacité de refroidissement d'air du système 110, conduit avec une température d'air extérieur de 83° F (28° C), de l'air soufflé à travers le serpentin de réfrigération 140 au régime de 1300 CFM a atteint une température d'état permanent mesurée de 38° F (3° C) après un intervalle de 15 minutes de fonctionnement du système 110. Cet essai a été conduit avec une serpentin de réfrigération 140 normalement utilisé pour les chambres froides du commerce, au lieu d'être conduit avec un serpentin de conditionnement d'air plus approprié. On estime que les performances du système 110 doivent s'améliorer de façon marquée avec un serpentin approprié de réfrigération d'air 10 installé dans le système.

Il convient de noter que le système considéré ci-avant est dimensionné de façon appropriée pour une application résidentielle domestique moyenne, et n'incorpore en conséquence qu'un seul panneau 212 et une unité de compresseur de une tonne 118. Mais il est prévu que si un compresseur standard de deux tonnes devait être utilisé, fonctionnant à 240 V courant continu en conjonction avec 2 ou 3 panneaux, un système de plus grande capacité, encore plus efficace, pourrait facilement être mis en oeuvre pour une utilisation domestique, commerciale ou industrielle.

De façon similaire, il convient de noter qu'en raison de la petite dimension et de la légèreté de poids du système décrit dans le présent mémoire, celui-ci se prête facilement à des installations d'une certaine mobilité, par exemple des caravanes et des installations de camping, ou des semi-remorques ou des avions réfrigérés, où le panneau collecteur peut être incorporé directement dans le revêtement extérieur de l'engin.

En conséquence, on a donné des indications particulières de capacités, de dimensions et de diamètres de conduites, mais dans des buts illustratifs seulement, et nullement limitatifs ; et les personnes spécialisées dans la partie se rendront facilement compte que les dimensions données peuvent être aménagées de manière à répondre à des besoins de plus grandes ou de plus petites capacités de systèmes, en fonction de l'application.

**Revendications**

1. Un système en circuit fermé, assisté par ambiance-énergie, pour chauffage et réfrigération, avec débit unidirectionnel de réfrigérant, caractérisé en ce qu'il comprend:
un moyen collecteur d'énergie ambiante pour recueillir l'énergie thermique à partir de l'ambiance et pour échanger la dite chaleur ambiante avec le dit réfrigérant de façon à produire un réfrigérant gazeux surchauffé ;
un moyen compresseur pour comprimer le dit réfrigérant gazeux surchauffé en un réfrigérant liquide chauffé ;
un premier moyen d'échangeur thermique pour échange de chaleur à partir du dit réfrigérant liquide chauffé sur une charge de chauffe et/ou sur l'air extérieur, le dit réfrigérant liquide chauffé étant pré-refroidi ;
un premier moyen de soupape d'expansion pour l'expansion du dit réfrigérant liquide pré-refroidi en un gaz, le dit réfrigérant expansé étant réfrigéré ; et
un deuxième moyen d'échangeur thermique pour échange de chaleur à partir d'une charge de refroidissement sur le dit réfrigérant réfrigéré.

2. Système selon la revendication 1, caractérisé en ce que ledit premier moyen d'échangeur thermique comprend en outre :
un troisième moyen d'échangeur thermique pour échange de chaleur à partir du dit réfrigérant liquide chauffé sur une charge de chauffe ; et
un moyen pré-refroidisseur pour le pré-refroidissement du dit réfrigérant liquide chauffé en série avec le dit troisième moyen d'échangeur thermique pour échange de chaleur à partir du dit réfrigérant liquide chauffé sur l'air extérieur pour le pré-refroidissement dudit réfrigérant liquide avant expansion du dit réfrigérant liquide pour réfrigération.

3. Système selon la revendication 2, caractérisé en ce qu'il comprend en outre :
un deuxième moyen de soupape d'expansion pour l'expansion du dit réfrigérant liquide, pouvant être raccordé entre le dit troisième moyen d'échangeur thermique et le dit moyen pré-refroidisseur et en parallèle avec le dit moyen pré-refroidisseur, le dit premier moyen de soupape d'expansion et le dit deuxième moyen d'échangeur thermique ; et
un premier moyen de vanne sélective pour diriger sélectivement le dit réfrigérant en réponse à un appel de charge de réfrigération, de façon à diriger le dit réfrigérant liquide chaud à partir du dit troisième moyen d'échangeur thermique vers le dit moyen pré-refroidisseur en réponse à un appel de charge de réfrigération, et de façon à diriger, dans un autre cas, le dit réfrigérant liquide chaud sur le dit deuxième moyen de soupape d'expansion, le dit moyen pré-refroidisseur, le dit premier moyen de soupape d'expansion et le dit deuxième moyen d'échangeur thermique étant ainsi évités.

4. Système selon la revendication 3, caractérisé en ce qu'il comprend en outre :
un moyen de dérivation, pouvant être relié en série entre le dit moyen de compresseur et le dit premier moyen de vanne sélective ; et
un deuxième moyen de vanne sélective pour diriger sélectivement le débit du dit réfrigérant, en réponse à un appel de charge calorifique, de manière à diriger le dit réfrigérant liquide à partir du dit moyen compresseur vers le dit troisième moyen d'échange thermique en réponse à un appel de charge calorifique, et de manière à diriger dans un autre cas le dit réfrigérant liquide sur le dit premier moyen de soupape d'expansion, le dit troisième moyen d'échangeur thermique étant ainsi contourné.

5. Système selon la revendication 4, caractérisé en ce qu'il comprend en outre :
un moyen pour détecter automatiquement les besoins en charge calorifique et/ou en charge réfrigérante se présentant sur le dit système, et pour actionner le dit système et contrôler les dits moyens de vannes sélectives afin de diriger le dit réfrigérant sur la dite charge calorifique et/ou la dite charge réfrigérante en réponse aux dits besoins, et pour mettre le dit système au repos dans les autres cas.

6. Système selon la revendication 5, caractérisé en ce que
le dit premier moyen d'échangeur thermique inclue en outre un moyen au moins pour échange de chaleur à partir du dit réfrigérant avec de l'eau ; et
le dit deuxième moyen d'échangeur thermique inclue en outre un moyen pour échange de chaleur à partir de l'air intérieur avec le dit réfrigérant réfrigéré.

7. Système selon la revendication 6, caractérisé en ce que
le dit premier moyen d'échangeur thermique inclue en outre au moins un moyen pour échange de chaleur à partir du dit réfrigérant avec l'air intérieur.

8. Un circuit fermé de chauffage et de réfrigération assisté par ambiance-énergie, ayant un débit unidirectionnel de réfrigérant caractérisé en ce qu'il comprend :
un moyen collecteur d'énergie ambiante monté extérieure ment pour recueillir de la chaleur ambiante à partir de la radiation solaire et de l'air ambiant, et pour transférer la dite chaleur ambiante au dit réfrigérant afin de chauffer le dit réfrigérant jusqu'à un état de gaz surchauffé ;
un moyen compresseur raccordé en série avec le dit moyen collecteur afin de recevoir le dit réfrigérant surchauffé et de le comprimer jusqu'à un état de liquide chauffé ;
une ramification calorifique raccordée en série avec le dit moyen compresseur afin de recevoir le dit réfrigérant comprimé, et qui inclue :
au moins un premier moyen d'échangeur thermique pouvant être raccordé en série avec le dit moyen compresseur pour transférer la chaleur, à partir du dit réfrigérant liquide chauffé, sur une charge calorifique ;
un moyen de dérivation pouvant être branché en série avec le dit moyen compresseur et en parallèle avec le dit premier moyen d'échangeur thermique afin de contourner le dit premier moyen d'échangeur thermique lors d'absence d'une charge calorifique ;
un premier moyen de vanne sélective raccordé en série entre le dit moyen compresseur et la dite ramification calorifique, répondant à un appel de charge calorifique de façon à diriger le dit réfrigérant liquide chauffé à partir du dit moyen compresseur jusqu'au dit premier moyen d'échangeur thermique en réponse à un appel de charge calorifique, et jusqu'au dit premier moyen de dérivation lors d'absence d'appel de charge calorifique, le dit premier moyen d'échangeur thermique étant contourné de ce fait ;
un premier moyen de soupape d'expansion pouvant être raccordé en série entre la dite ramification calorifique et le dit moyen collecteur, le dit premier moyen de soupape d'expansion comprenant en outre un moyen pour détecter la température du dit réfrigérant quittant le moyen collecteur, et un moyen d'orifice variable répondant à la dite température de sortie de manière à varier le débit du dit réfrigérant dans la soupape d'expansion afin d'assurer la régulation du débit du dit réfrigérant retournant, par l'intermédiaire du dit premier moyen de soupape d'expansion, de la dite ramification calorifique au dit moyen collecteur ;
une ramification de réfrigération, pouvant être raccordée en série entre la dite ramification calorifique et le dit moyen collecteur et en parallèle avec le dit premier moyen de soupape d'expansion, cette ramification de réfrigération comprenant en série :
un moyen de pré-réfrigération pour transférer de la chaleur à partir du dit réfrigérant liquide vers l'air extérieur de manière à pré-refroidir le dit réfrigérant avant expansion ;
un deuxième moyen de soupape d'expansion pour l'expansion du dit réfrigérant liquide pré-refroidi de façon à réfrigérer le dit réfrigérant ;
au moins un deuxième moyen d'échangeur thermique pour transférer de la chaleur à partir d'une charge de réfrigération sur le dit réfrigérant réfrigéré ;
le dit deuxième moyen de soupape d'expansion comprenant en outre un moyen pour détecter la température du dit réfrigérant quittant le deuxième moyen d'échangeur thermique, et un moyen d'orifice variable répondant à la température de sortie détectée de manière à varier le débit du dit réfrigérant dans la soupape d'expansion afin d'assurer la régulation du débit du dit réfrigérant, provenant de la dite ramification calorifique , à travers le dit deuxième moyen de soupape d'expansion et en direction du dit deuxième moyen d'échangeur thermique ; et
un deuxième moyen de vanne sélective raccordé en série entre la dite ramification calorifique et la dite ramification de réfrigération, répondant à un appel de charge de réfrigération, de manière à diriger le réfrigérant liquide chauffé à partir de la dite ramification calorifique vers la dite ramification de réfrigération en réponse à un appel de charge de réfrigération, et vers le dit premier moyen de soupape d'expansion en cas d'absence de cet appel, la dite ramification de réfrigération étant ainsi contournée.

9. Circuit selon la revendication 8, caractérisé en ce qu'il comprend en outre un moyen de receveur de réfrigérant liquide raccordé entre la dite ramification calorifique et le dit deuxième moyen de vanne sélective de façon à recevoir le dit liquide réfrigérant.

10. Circuit selon la revendication 8, caractérisé en ce que le dit moyen pré-refroidisseur inclue un moyen pour forcer l'air extérieur en contact d'échange thermique avec le dit pré-refroidisseur.

11. Circuit selon la revendication 8, caractérisé en ce qu'il comprend en outre :
un moyen pour détecter automatiquement les besoins en charge calorifique et/ou en charge de réfrigération sur le dit circuit, pour mettre en action le dit circuit, et pour commander le dit moyen de vanne sélective de façon à diriger le dit réfrigérant vers la dite ramification calorifique et/ou la dite ramification de réfrigération en réponse aux dits besoins, et pour mettre le dit système au repos dans les autres cas.

12. Circuit selon la revendication 8, caractérisé en ce que

la dite ramification calorifique comprend en outre au moins un moyen d'échangeur thermique pour le chauffage de l'eau ; et

la dite ramification de réfrigération comprend en outre au moins un moyen d'échangeur thermique pour le refroidissement de l'air intérieur.

13. Circuit selon la revendication 12, caractérisé en ce que

la dite ramification calorifique inclue en outre au moins un moyen d'échangeur thermique pour le chauffage de l'air intérieur.

14. En combinaison avec un système en circuit fermé, assisté par ambiance-énergie, de chauffage et de réfrigération, ayant un débit de réfrigérant unidirectionnel, du type incluant : un compresseur, des échangeurs thermiques, des soupapes d'expansion et des vannes de commande, des moyens perfectionnés pour recueillir l'énergie thermique à partir de l'ambiance et pour transférer la dite énergie thermique sur le dit réfrigérant, caractérisés en ce qu'ils comprennent :

un moyen de panneau comportant un plenum d'entrée, un plenum de sortie et une pluralité de conduites verticales parallèles raccordées entre le dit plenum d'entrée et le dit plenum de sortie ;

le dit plenum de sortie étant profilé en forme de V renversé et comportant une sortie au sommet du dit V ;

le dit plenum d'entrée s'étendant transversalement par rapport à la dite pluralité de conduites et comportant une pluralité d'entrées également distantes les unes des autres pour cette dite pluralité de conduites ; et

le dit moyen de panneau comportant au minimum une surface rigoureusement noircie afin d'assurer un maximum de quantité d'absorption de la radiation solaire incidente frappant la dite surface.

15. Système selon la revendication 14, caractérisé en ce qu'il comprend en outre :

un moyen de conduite reliant la dite sortie de moyen de panneau au dit moyen compresseur, et ayant un diamètre intérieur sensiblement plus grand que le diamètre intérieur de la dite sortie de moyen de panneau.

16. Système selon la revendication 15, caractérisé en ce qu'il comprend en outre :

un moyen de conduite raccordé en parallèle aux dites entrées de moyen de panneau pour le retour, afin qu'il se réchauffe, du dit réfrigérant au dit moyen de panneau, le dit moyen de conduite de retour étant établi en pente par rapport à la gravité

afin de permettre à l'huile de lubrification dans le dit réfrigérant de s'évacuer du dit moyen de panneau.

17. Système selon les revendications 1, 8 ou 14, caractérisé en ce que ledit réfrigérant comprend :

un mélange d'huile de lubrification finement dispersée et un mélange azeotropique de $CHClF_2$ et de $CClF_2CF_3$ ayant un point d'ébullition de moins 50 $^\circ$F (- 45 $^\circ$C) à la pression atmosphérique.

18. Système selon la revendication 17, caractérisé en ce que ledit réfrigérant comprend en outre : Freon 502.

Fig. 2.

Fig. 3.

Fig. 4.

Fig. 1.

Fig. 5.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 559 881 (THIERRY) | | F 25 B 29/00 |
| | * En entier * | 1 | F 25 B 27/00 |
| Y | | 17,18 | |
| A | | 2,14 | |
| | -- | | |
| X | US-A-4 015 962 (TOMPKINS) | | |
| | * En entier * | 1 | |
| A | | 2-9, 11-13 | |
| | -- | | |
| Y | WORLD PUMPS, no. 1, 1982, pages 17-27; East Molesy, Surrey, GB H.J. BAUDER: "Fundamentals of heat pump technology" | | |
| | * Page 20, colonne de droite * | 17,18 | |
| | -- | | **DOMAINES TECHNIQUES RECHERCHES (Int. Cl.4)** |
| A | US-A-4 290 413 (GOODMAN et al.) | | |
| | * En entier * | 14 | F 25 B |
| | -- | | F 24 J |
| A | FR-A-2 309 819 (OLIN CORP.) | | |
| | * Page 4, ligne 36 - page 5, ligne 13; figure 5 * | 14 | |
| | -- | | |
| A | DE-A-2 551 987 (KLOOS) | | |
| A | US-A-4 173 994 (HISER) | | |
| A | PATENT ABSTRACTS OF JAPAN, vol. 9, no. 155 (M-392)(1878), 29 juin 1985 & JP-A-60 30 951 (MISAWA HOOMU) 16-02-1985 | | |

--------------------
Le présent rapport de recherche a été établi pour toutes les revendications

| Lieu de la recherche | Date d'achèvement de la recherche | Examinateur |
|---|---|---|
| La Haye | 13-09-1988 | SILVIS |

Office européen

des brevets

---

## REVENDICATIONS DONNANT LIEU AU PAIEMENT DE TAXES

La présente demande de brevet européen comportait lors de son dépôt plus de dix revendications.

☐ Toutes les taxes de revendication ayant été acquittées dans les délais prescrits, le présent rapport de recherche européenne a été établi pour toutes les revendications.

☐ Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées,

à savoir les revendications:

☐ Aucune taxe de revendication n'ayant été acquittée dans les délais prescrits, le présent rapport de recherche européenne a été établi pour les dix premières revendications.

---

## X │ ABSENCE D'UNITE D'INVENTION

La division de la recherche estime que la présente demande de brevet européen ne satisfait pas à l'exigence relative à l'unité d'invention et concerne plusieurs inventions ou pluralités d'inventions,

à savoir:

1. Revendications 1-13,17,18: Système en circuit fermé pour chauffage et réfrigération intégré, à fonctionnement assisté par l'ambiance

2. Revendications 14-16: Panneau collecteur destiné à être utilisé.en conjuction avec un système en circuit fermé pour chauffage et réfrigération integré

☒ Toutes les nouvelles taxes de recherche ayant été acquittées dans les délais impartis, le présent rapport de recherche européenne a été établi pour toutes les revendications.

☐ Une partie seulement des nouvelles taxes de recherche ayant été acquittée dans les délais impartis, le présent rapport de recherche européenne a été établi pour les parties de la demande de brevet européen qui se rapportent aux inventions pour lesquelles les taxes de recherche ont été acquittées

à savoir les revendications:

☐ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications,

à savoir les revendications: